# EUROPEAN PATENT APPLICATION

(11) **EP 4 726 974 A1**
(43) Date of publication of application: **15.04.2026**
(21) Application number: 23941453.5
(22) Date of filing: 12.06.2023
(51) Int. Cl.: H02K 5/10

(54) **MOTOR AND VEHICLE**

(71) Applicant: Mitsubishi Electric Mobility Corporation, Tokyo 100-8310 (JP)
(72) Inventor: FUJISAWA Kazuya, Tokyo 100-8310 (JP); FUNABIKI Yusuke, Tokyo 100-8310 (JP); SONODA Isao, Tokyo 100-8310 (JP)
(74) Representative: Hoffmann Eitle
(86) International application number: PCT/JP2023/021657
(87) International publication number: WO 2024/257141

(57) **Abstract**

A motor includes a motor main body including a stator and a rotor which rotates around a rotation axis extending in a vertical direction, a frame housing the motor main body, a housing positioned above the motor main body, a control board having a control unit that controls the motor main body and positioned above the housing, a connector electrically connected to the control unit and fixed to the frame, a cover covering the control unit, a first waterproof portion sealing a first boundary portion that is a boundary portion between the frame and the cover and having waterproof properties, and a second waterproof portion sealing a second boundary portion that is a boundary portion between the connector and the frame and having waterproof properties, in which each of the first boundary portion and the second boundary portion has an annular shape when viewed from the vertical direction.

## Description

### Technical Field

The present disclosure relates to a motor and a vehicle.

### Background Art

Conventionally, a motor used in an electric power steering device mounted in a vehicle is known. Patent Document 1 discloses a motor having a configuration in which a plurality of components (such as a housing, a connector, and a cover) are exposed to the outside. In this motor, waterproof properties are ensured by disposing a waterproof adhesive (waterproof portion) in gaps (boundary portions) formed between the components.

### Citation List

### Patent Document

Patent Document 1: Japanese Unexamined Patent Application, First Publication No. 2020-167894

### Summary of Invention

### Problem to be Solved by the Invention

In the motor of Patent Document 1, the boundary portions of the housing, the connector, and the cover overlap each other, and shapes of the gaps formed between the components are complicated. Therefore, there has been a problem that this may lead to a decrease in reliability of an airtight structure, and time and effort required for a process of applying the adhesive to the boundary portions increase.

Also, due to reasons such as bringing the connector closer to a center of the motor, the motor of Patent Document 1 is premised on a configuration in which the connector is fixed to the housing and becomes part of the housing (a so-called front-mounted connector configuration). Therefore, there was a possibility that a layout of the product (for example, a vehicle) in which the motor is mounted may be limited.

The present disclosure has been made in consideration of such circumstances, and an objective of the present invention is to provide a motor and vehicle that allow a waterproof portion to be disposed at a boundary portion between components constituting the motor at low cost and with high quality without impairing a degree of freedom of layout of a product in which the motor is mounted.

### Means to Solve the Problem

In order to solve the above-described problems, a motor according to aspect 1 of the present disclosure includes a motor main body including a stator and a rotor which rotates around a rotation axis extending in a vertical direction, a frame housing the motor main body, a housing positioned above the motor main body, a control board having a control unit that controls the motor main body and positioned above the housing, a connector electrically connected to the control unit and fixed to the frame, a cover covering the control unit, a first waterproof portion sealing a first boundary portion that is a boundary portion between the frame and the cover and having waterproof properties, and a second waterproof portion sealing a second boundary portion that is a boundary portion between the connector and the frame and having waterproof properties, in which each of the first boundary portion and the second boundary portion has an annular shape when viewed from the vertical direction.

In order to solve the above-described problems, a motor according to aspect 7 of the present disclosure includes a motor main body including a stator and a rotor which rotates around a rotation axis extending in a vertical direction, a frame housing the motor main body, a housing positioned above the motor main body, a control board having a control unit that controls the motor main body and positioned above the housing, a connector electrically connected to the control unit and fixed to the housing, a cover covering the control unit, a first waterproof portion sealing a first boundary portion that is a boundary portion between the frame and the cover and having waterproof properties, and a third waterproof portion sealing a third boundary portion that is a boundary portion between the connector and the cover and having waterproof properties, in which each of the first boundary portion and the third boundary portion has an annular shape when viewed from the vertical direction.

### Effects of the Invention

According to the above-described aspects of the present disclosure, it is possible to provide a motor and a vehicle that allow a waterproof portion to be disposed at a boundary portion between components constituting the motor at low cost and with high quality without impairing layout flexibility of a product in which the motor is mounted.

### Brief Description of Drawings

[FIG. 1] A cross-sectional view illustrating a motor according to embodiment 1.
[FIG. 2] An enlarged view illustrating the vicinity of a first boundary portion and a second boundary portion according to embodiment 1.
[FIG. 3] A cross-sectional view illustrating a motor according to embodiment 2.
[FIG. 4] An enlarged view illustrating the vicinity of a first boundary portion and a third boundary portion according to embodiment 2.
[FIG. 5] A schematic view illustrating a vehicle according to embodiment 3. Description of Embodiments

### Embodiment 1.

Hereinafter, a motor according to embodiment 1 will be described on the basis of the drawings.

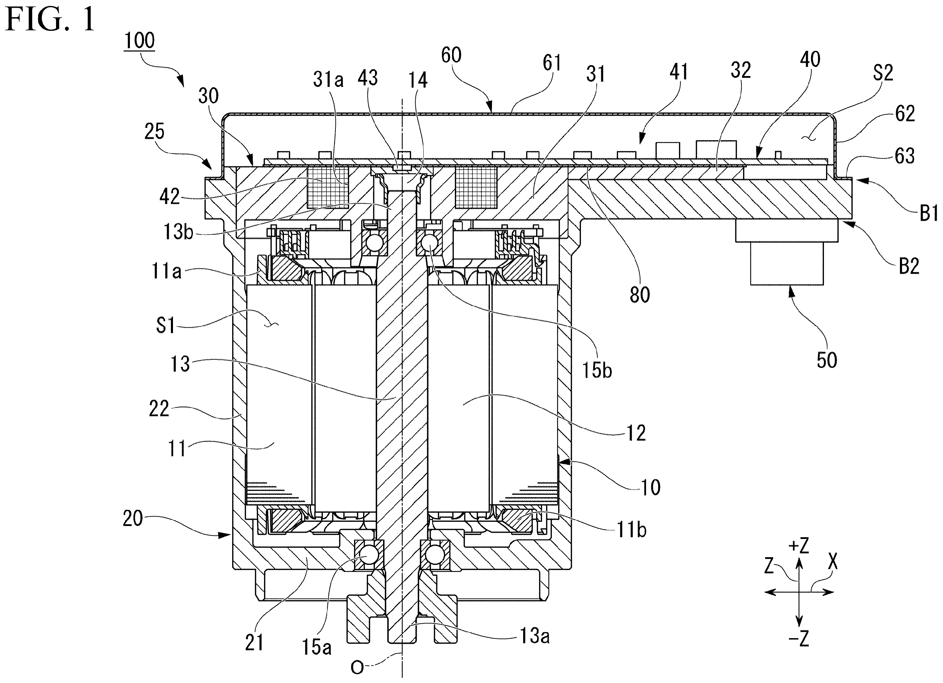

As illustrated in FIG. 1, a motor 100 according to the present embodiment includes a motor main body 10, a frame 20, a housing 30, a control board 40, a connector 50, and a cover 60. The motor main body 10 has a rotation axis O extending in one direction.

In the following description, a direction in which the rotation axis O of the motor main body 10 extends may be referred to as an axial direction Z or a vertical direction Z. In the present embodiment, the motor main body 10 and the control board 40 are arranged in the vertical direction Z. In the vertical direction Z, a direction from the control board 40 toward the motor main body 10 is referred to as downward or an output side, and may be expressed as a -Z direction. In the vertical direction Z, a direction from the motor main body 10 toward the control board 40 is referred to as upward or a non-output side, and may be expressed as a +Z direction. A view from the vertical direction Z may be referred to as a plan view. In a plan view, a direction intersecting the rotation axis O may be referred to as a radial direction, and a direction of revolving around the rotation axis O may be referred to as a circumferential direction. Also, one direction that intersects (for example, is perpendicular to) the vertical direction Z may be referred to as a cross direction X.

In the present embodiment, the motor main body 10 includes a stator 11, a rotor 12, and a shaft 13.

The stator 11 has a cylindrical shape extending in the vertical direction Z. The stator 11 has a stator core around which a coil 11b is wound via an insulator 11a. The stator 11 is fixed to the frame 20. A method for fixing the stator 11 to the frame 20 is not particularly limited, and a method such as, for example, shrink fitting or press fitting may be used.

The rotor 12 is disposed inside of the stator 11 in the radial direction. The rotor 12 has a cylindrical shape extending in the vertical direction Z. The rotor 12 includes, for example, a rotor core and a permanent magnet (not illustrated in detail).

The shaft 13 is fixed to a radially inner side of the rotor 12. The shaft 13 extends along the rotation axis O. The shaft 13 has a first end (output end) 13a and a second end (non-output end) 13b. In the illustrated example, the first end 13a is a lower end of the shaft 13, and the second end 13b is an upper end of the shaft 13.

The first end 13a is held by a first bearing 15a provided in the frame 20 (bottom portion 21). When the motor 100 is used in an electric power steering device, the first end 13a engages with a gear or the like for assisting the device, for example, via a boss or the like. The second end 13b is held by a second bearing 15b provided in the housing 30 (closing portion 31). The bearings 15a and 15b hold the shaft 13, and thereby the shaft 13 and the rotor 12 rotate around the rotation axis O. A sensor magnet 14 for transmitting magnetism to a rotation sensor 43 to be described later is attached to the second end 13b.

The frame 20 houses the motor main body 10. The frame 20 according to the present embodiment includes the bottom portion 21, a cylindrical portion 22, and an extension portion 23. The bottom portion 21 is positioned below the stator 11 and the rotor 12, and holds the first bearing 15a described above. The cylindrical portion 22 extends upward from an outer circumferential edge portion of the bottom portion 21 in a plan view. The bottom portion 21 and the cylindrical portion 22 together form a bottomed cylindrical shape, thereby forming a first internal space S1. The motor main body 10 is accommodated in the first internal space S 1. The extension portion 23 extends from an upper end part of the cylindrical portion 22 toward one side in the cross direction X (right side in the drawing). The bottom portion 21, the cylindrical portion 22, and the extension portion 23 may be integrally formed.

The housing 30 is positioned above the frame 20. The housing 30 according to the present embodiment includes the closing portion 31 and a holding portion 32. The closing portion 31 is fixed to an upper end part of the cylindrical portion 22 and closes an upper end of the first internal space S1. A method for fixing the closing portion 31 to the cylindrical portion 22 is not particularly limited, and a method such as, for example, press-fitting, caulking, or the like may be used.

The holding portion 32 is positioned on an upper portion of the housing 30. More specifically, in the illustrated example, the holding portion 32 extends from an upper end portion of the closing portion 31 toward one side in the cross direction X (right side in the drawing). A direction in which the closing portion 31 extends from the holding portion 32 may be the same as the direction in which the extension portion 23 extends from the cylindrical portion 22. The holding portion 32 and the closing portion 31 hold the control board 40 with a screw or the like (not illustrated).

The control board 40 is positioned above the housing 30. Specifically, the control board 40 may be placed on the housing 30. The control board 40 is held on the housing 30 by, for example, a screw or the like (not illustrated).

The control board 40 includes a control unit 41 that controls the motor main body 10. The control unit 41 may include, for example, a control electronic component, a power semiconductor component which forms an inverter circuit, and the like. In addition to the control unit 41, an electrolytic capacitor 42, the rotation sensor 43 for controlling a rotational position of the motor, and the like may be mounted on the control board 40.

In the illustrated example, the electrolytic capacitor 42 is mounted on a lower surface of the control board 40. Also, a recessed portion 31a opening upward is formed in a portion of the housing 30 (closing portion 31) corresponding to the electrolytic capacitor 42. The electrolytic capacitor 42 is disposed in the recessed portion 31a. The recessed portion 31a functions as a relief portion for preventing interference between the housing 30 and the electrolytic capacitor 42. When such a relief portion is provided to dispose the electrolytic capacitor 42 on the lower surface (output side) of the control board 40, it becomes easier to reduce an axial length of a motor control unit (MCU).

Also, a heat dissipation portion 80 for releasing heat generated in the control board 40 to the housing 30 may be provided between the control board 40 and the housing 30. Types of the heat dissipation portion 80 are not particularly limited as long as it is possible for the control board 40 to dissipate heat to the housing 30, but the heat dissipation portion 80 may be, for example, thermal grease or the like. When such a heat dissipation portion 80 is provided, it is possible to improve heat dissipation performance of the control board 40.

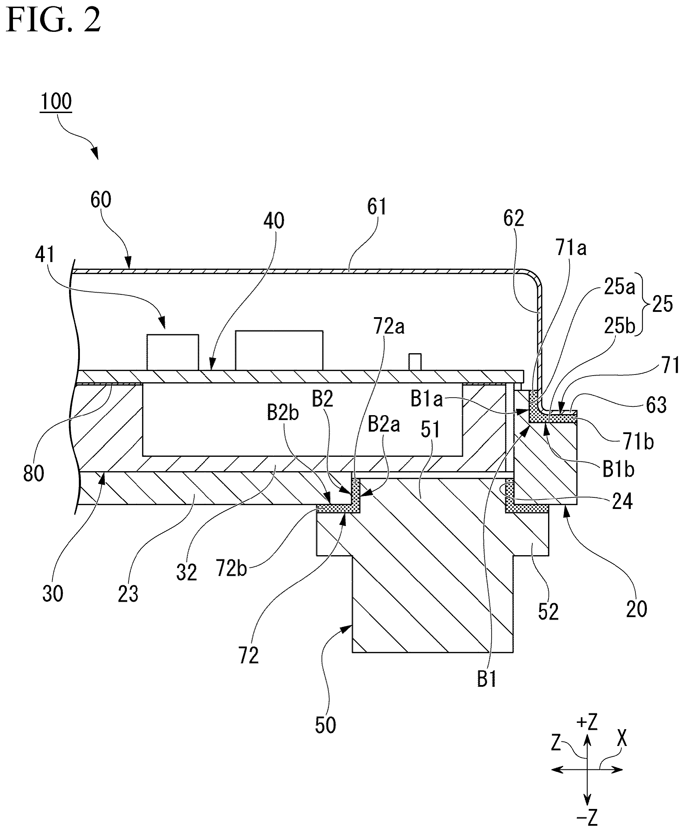

Although detailed illustration is omitted, the connector 50 is electrically connected to the control board 40 (control unit 41) via, for example, a terminal or the like. The connector 50 may be used, for example, to receive power supply from the outside of the motor 100 (for example, a vehicle) or to receive a signal from a torque sensor or the like. As illustrated in FIG. 2, the connector 50 according to the present embodiment is fixed to the frame 20. More specifically, the connector 50 is fitted into a fitting hole 24 formed in the frame 20 from below, and is fixed to the frame 20 by a screw or the like (not illustrated). The connector 50 is positioned below (on the output side) when viewed from the control board 40. The connector 50 is exposed on a lower side (output side) of the frame 20. The connector 50 according to the present embodiment includes an insertion portion 51 and an outer circumferential protruding portion 52. The insertion portion 51 is a portion of the connector 50 inserted into the fitting hole 24. The outer circumferential protruding portion 52 is a protruding portion that protrudes from an outer circumferential surface of the connector 50.

As illustrated in FIGS. 1 and 2, the cover 60 covers the control unit 41. Thereby, the control unit 41 is prevented from being exposed to the outside of the motor 100. The cover 60 according to the present embodiment has a top portion 61, an outer circumferential portion 62, and a flange portion 63. The top portion 61 is positioned above the control board 40 (control portion 41). The outer circumferential portion 62 extends downward from an outer circumferential edge portion of the top portion 61 in a plan view. The outer circumferential portion 62 has a cylindrical shape. The top portion 61 and the outer circumferential portion 62 together form a topped cylindrical shape, thereby forming a second internal space S2. The control board 40 (control unit 41) is disposed in the second internal space S2. The flange portion 63 extends radially outward from a lower end portion of the outer circumferential portion 62. The top portion 61, the outer circumferential portion 62, and the flange portion 63 may be integrally formed. The cover 60 is fixed to the frame 20 by, for example, a snap fit.

A lower end portion of the cover 60 (the lower portion part of the outer circumferential portion 62 and the flange portion 63) is disposed in a fitting recessed portion 25 formed in the frame 20. The fitting recessed portion 25 is positioned on an outer circumferential edge portion of the frame 20 in a plan view. As illustrated in FIG. 2, the fitting recessed portion 25 has a first surface 25a facing radially outward and a second surface 25b facing upward.

Of the components constituting the motor 100, the frame 20, the connector 50, and the cover 60 are exposed to the outside of the motor 100. In the present embodiment, in order to improve airtightness of the motor 100, a waterproof portion having waterproof properties is provided between (at boundary portions between) the three components (the frame 20, the connector 50, and the cover 60).

Hereinafter, for ease of explanation, a region (boundary portion) between the frame 20 and the cover 60 will be referred to as a first boundary portion B1, and a region (boundary portion) between the connector 50 and the frame 20 will be referred to as a second boundary portion B2 (see FIG. 2). Also, a waterproof portion provided at the first boundary portion B1 is referred to as a first waterproof portion 71, and a waterproof portion provided at the second boundary portion B2 is referred to as a second waterproof portion 72. The first waterproof portion 71 seals the first boundary portion B1. The second waterproof portion 72 seals the second boundary portion B2.

Each of the first boundary portion B1 and the second boundary portion B2 has a continuous annular shape in a plan view. When the boundary portions B1 and B2 are formed in such a simple shape, it is possible to dispose the waterproof portions 71 and 72 on the boundary portions B1 and B2 at low cost and with high quality. For example, it is possible to form the first waterproof portion 71 with high quality and at low cost by applying a silicone adhesive in a single continuous stroke on a plane. Similarly, for example, it is possible to form the second waterproof portion 72 with high quality and at low cost by applying a silicone adhesive in a single continuous stroke on a plane.

Specifically, the first boundary portion B1 according to the present embodiment includes a vertical region B1a and a horizontal region B1b. The vertical region B1a is positioned between the outer circumferential portion 62 of the cover 60 and the first surface 25a of the fitting recessed portion 25 in a direction intersecting (for example, perpendicular to) the vertical direction Z. The horizontal region B1b is positioned between the flange portion 63 of the cover 60 and the second surface 25b of the fitting recessed portion 25 in the vertical direction Z.

Similarly, the second boundary portion B2 according to the present embodiment includes a vertical region B2a and a horizontal region B2b. The vertical region B2a is positioned between an inner circumferential surface of the fitting hole 24 and the insertion portion 51 of the connector 50 in a direction intersecting (for example, perpendicular to) the vertical direction Z. The horizontal region B2b is positioned between a lower surface of the extension portion 23 and the outer circumferential protruding portion 52 of the connector 50 in the vertical direction Z.

The first waterproof portion 71 has a continuous annular shape in a plan view. Specifically, the first waterproof portion 71 may have a vertical wall portion 71a extending in the vertical direction Z and a horizontal wall portion 71b intersecting (for example, perpendicular to) the vertical direction Z. The vertical wall portion 71a is disposed in the vertical region B1a of the first boundary portion B1. The horizontal wall portion 71b is disposed in the horizontal region B1b of the first boundary portion B1. The first waterproof portion 71 may have only one of the vertical wall portion 71a and the horizontal wall portion 71b, or may have both the vertical wall portion 71a and the horizontal wall portion 71b.

Similarly, the second waterproof portion 72 has a continuous annular shape in a plan view. Specifically, the second waterproof portion 72 may have a vertical wall portion 72a extending in the vertical direction Z and a horizontal wall portion 72b intersecting (for example, perpendicular to) the vertical direction Z. The vertical wall portion 72a is disposed in the vertical region B2a of the second boundary portion B2. The horizontal wall portion 72b is disposed in the horizontal region B2b of the second boundary portion B2. The second waterproof portion 72 may have only one of the vertical wall portion 72a and the horizontal wall portion 72b, or may have both the vertical wall portion 72a and the horizontal wall portion 72b.

As described above, the motor 100 according to the present embodiment includes the motor main body 10 including the stator 11 and the rotor 12 which rotates around the rotation axis O extending in the vertical direction Z, the frame 20 housing the motor main body 10, the housing 30 positioned above the motor main body 10, the control board 40 having the control unit 41 that controls the motor main body 10 and positioned above the housing 30, the connector 50 electrically connected to the control unit 41 and fixed to the frame 20, the cover 60 covering the control unit 41, the first waterproof portion 71 sealing the first boundary portion B1 that is a boundary portion between the frame 20 and the cover 60 and having waterproof properties, and the second waterproof portion 72 sealing the second boundary portion B2 that is a boundary portion between the connector 50 and the frame 20 and having waterproof properties, in which each of the first boundary portion B1 and the second boundary portion B2 has an annular shape when viewed from the vertical direction Z.

With this configuration, the boundary portions B1 and B2 have a simple shape, and it is possible to dispose the waterproof portions 71 and 72 on the boundary portions B1 and B2 at low cost and with high quality. Also, since the frame 20 is formed of a single member, it is possible to reduce the number of locations where waterproof portions need to be disposed. Thereby, it is possible to facilitate disposition of the waterproof portion and to enhance waterproof properties, compared to when two or more members are joined to form the frame 20.

Also, the first waterproof portion 71 and the second waterproof portion 72 respectively have the vertical wall portions 71a and 72a extending in the vertical direction Z, and the horizontal wall portions 71b and 72b extending in a direction intersecting the vertical direction Z. With this configuration, it is possible to further enhance the waterproof properties of the waterproof portions 71 and 72.

### Embodiment 2.

Next, a motor according to embodiment 2 will be described, but a basic configuration is the same as that of the motor according to embodiment 1. Therefore, components which are the same are denoted by the same reference signs, description thereof will be omitted, and only different points will be described.

In the present embodiment, configurations of boundary portions and waterproof portions positioned between three components (a frame 20, a connector 50, and a cover 60) are different from those in embodiment 1.

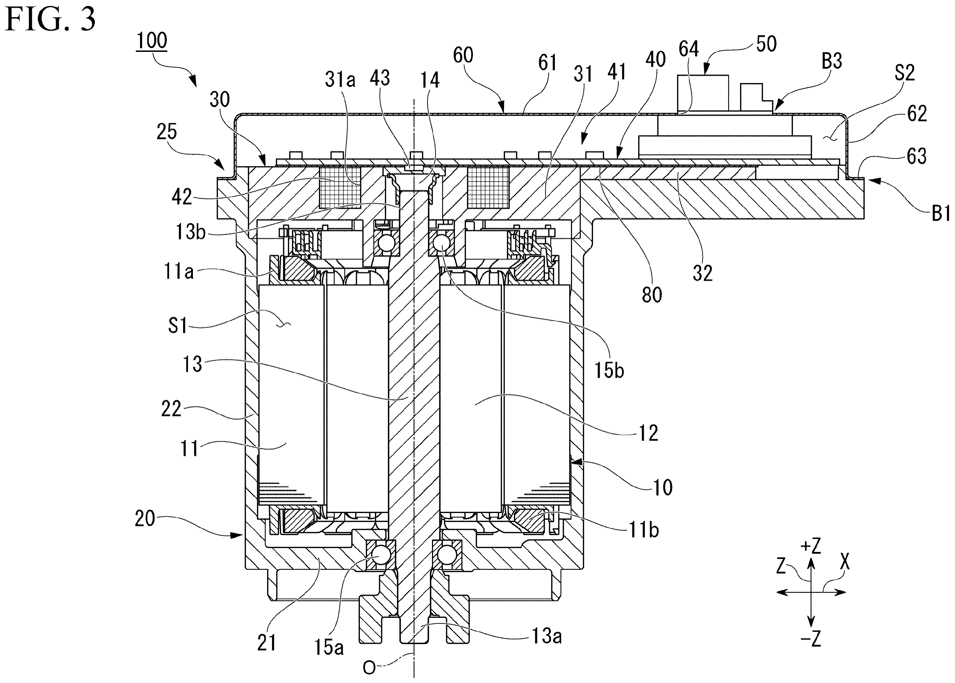

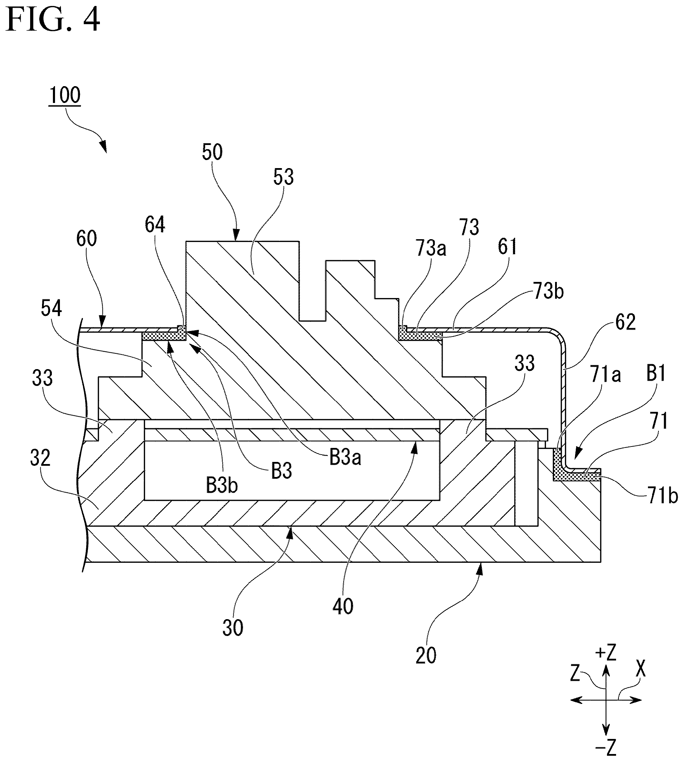

As illustrated in FIGS. 3 and 4, the connector 50 according to the present embodiment is positioned above (on a non-output side of) a control board 40. Also, an opening 64 for preventing interference with the connector 50 is provided at a top portion 61 of the cover 60. Thereby, the connector 50 is exposed on an upper side (non-output side) of the cover 60. The connector 50 according to the present embodiment has a protruding portion 53 and a step portion 54 that protrudes from a base end portion of the protruding portion 53 toward an outer circumference. Also, the connector 50 according to the present embodiment is fixed to a housing 30 rather than to the frame 20. The housing 30 may have a fixing protruding portion 33 for fixing the connector 50.

In a motor 100 according to the present embodiment, a third boundary portion B3, which is a boundary portion between the connector 50 and the cover 60, is present instead of the second boundary portion B2 according to embodiment 1. Then, a third waterproof portion 73 sealing the third boundary portion B3 and having waterproof properties is disposed on the third boundary portion B3. Note that, presence of a first boundary portion B1 in the motor 100 and disposition of a first waterproof portion 71 at the first boundary portion B1 are the same as in embodiment 1.

The third boundary portion B3 has a continuous annular shape in a plan view. When the third boundary portion B3 is formed in such a simple shape, it is possible to dispose the third waterproof portion 73 on the third boundary portion B3 at low cost and with high quality. Similarly, for example, it is possible to form the third waterproof portion 73 with high quality and at low cost by applying a silicone adhesive in a single continuous stroke on a plane.

Specifically, the third boundary portion B3 according to the present embodiment includes a vertical region B3a and a horizontal region B3b. The vertical region B3a is positioned between an inner circumferential surface of the opening 64 and the protruding portion 53 of the connector 50 in a direction intersecting (for example, perpendicular to) a vertical direction Z. The horizontal region B3b is positioned between a lower surface of the top portion 61 and an upper surface of the step portion 54 in the vertical direction Z.

The third waterproof portion 73 has a continuous annular shape in a plan view. Specifically, the third waterproof portion 73 may have a vertical wall portion 73a extending in the vertical direction Z and a horizontal wall portion 73b intersecting (for example, perpendicular to) the vertical direction Z. The vertical wall portion 73a is disposed in the vertical region B3a of the third boundary portion B3. The horizontal wall portion 73b is disposed in the horizontal region B3b of the third boundary portion B3. The third waterproof portion 73 may have only one of the vertical wall portion 73a and the horizontal wall portion 73b, or may have both the vertical wall portion 73a and the horizontal wall portion 73b.

As described above, the motor 100 of the present embodiment includes a motor main body 10 including a stator 11 and a rotor 12 which rotates around a rotation axis O extending in the vertical direction Z, the frame 20 housing the motor main body 10, the housing 30 positioned above the motor main body 10, the control board 40 having a control unit 41 that controls the motor main body 10 and positioned above the housing 30, the connector 50 electrically connected to the control unit 41 and fixed to the housing 30, the cover 60 covering the control unit 41, the first waterproof portion 71 sealing the first boundary portion B1 that is a boundary portion between the frame 20 and the cover 60 and having waterproof properties, and the third waterproof portion 73 sealing the third boundary portion B3 that is a boundary portion between the connector 50 and the cover 60 and having waterproof properties, and in which each of the first boundary portion B1 and the third boundary portion B3 has an annular shape when viewed from the vertical direction Z.

With this configuration, the boundary portions B1 and B3 have a simple shape, and it is possible to dispose the waterproof portions 71 and 73 on the boundary portions B1 and B3 at low cost and with high quality.

Also, the first waterproof portion 71 and the third waterproof portion 73 respectively have the vertical wall portions 71a and 73a extending in the vertical direction Z, and the horizontal wall portions 71b and 73b extending in a direction intersecting the vertical direction Z. With this configuration, it is possible to further enhance the waterproof properties of the waterproof portions 71 and 73.

Also, as illustrated in embodiments 1 and 2, according to the shapes of the boundary portions B1 to B3 as described above, it is possible to position the connector 50 on either the upper side (non-output side) or the lower side (output side) of the control board 40. Thereby, it is possible to make it less likely to impair layout flexibility of a product (for example, a vehicle) in which the motor 100 is mounted.

### Embodiment 3.

In the present embodiment, a vehicle related to the motor described in embodiments 1 and 2 will be described.

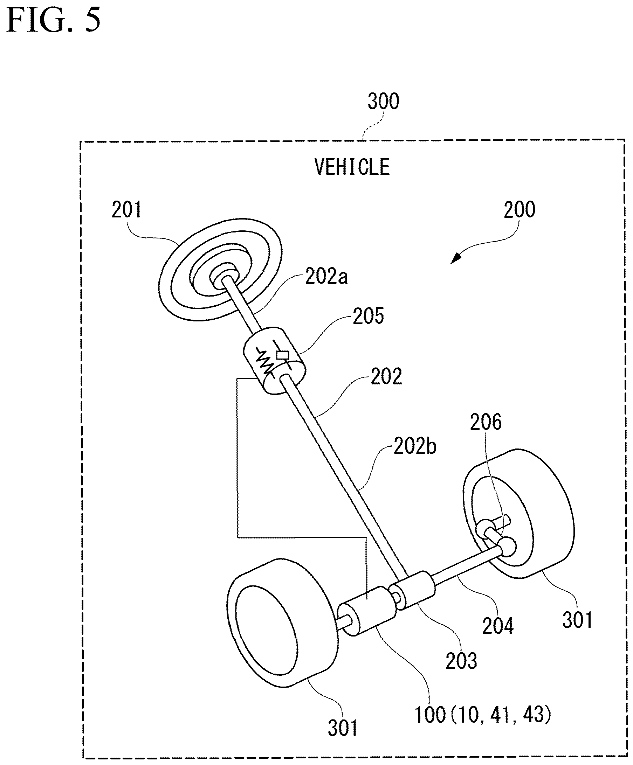

It is possible to use the motor 100 described in embodiments 1 and 2, for example, in an electric power steering device mounted in a vehicle. FIG. 5 is a schematic view of a vehicle 300 according to the present embodiment. The vehicle 300 includes a pair of wheels 301. An electric power steering device 200 is mounted in the vehicle 300. The electric power steering device 200 according to the present embodiment includes a motor 100, a steering wheel 201, a steering shaft 202, a rack and pinion gear 203, a tie rod 204, and a torque detector 205. As described in the above-described embodiment, the motor 100 includes a motor main body 10, a control unit 41, and a rotation sensor 43 (see also FIGS. 1 and 3).

A steering torque is applied to the steering wheel 201 by a driver's steering operation (not illustrated) or the like. The steering shaft 202 includes an input shaft 202a connected to the steering wheel 201 and an output shaft 202b connected to the rack and pinion gear 203. The input shaft 202a and the output shaft 202b are connected to each other by a torsion bar (not illustrated). The torsion bar is disposed inside the torque detector 205 and penetrates the torque detector 205 in an axial direction.

A steering torque applied to the steering wheel 201 is transmitted to a rack (not illustrated) in the rack and pinion gear 203 via a torsion bar in the torque detector 205, the steering shaft 202, and a pinion (not illustrated) in the rack and pinion gear 203. The rack and the wheel 301 are connected via the tie rod 204 and a knuckle arm 206. Therefore, when the steering torque due to the steering operation is transmitted to the rack, the tie rod 204 pushes the knuckle arm 206 at the wheel 301 on one side, and the tie rod 204 pulls the knuckle arm 206 at the wheel 301 on the other side. Thereby, a steering angle is applied to the wheel 301, and the wheel 301 is steered.

The motor main body 10 of the motor 100 generates a torque according to a voltage applied from the control unit 41. The torque (output torque) generated by the motor 100 is transmitted to the rack in the rack and pinion gear 203 (or the tie rod 204). That is, the electric power steering device 200 according to the present embodiment is a so-called rack-assist type electric power steering device. As a specific example, a first end (output end) 13a of a shaft 13 explained in the above-described embodiment may be engaged with the rack via a boss or the like. The motor 100 is disposed in the vicinity of the wheel 301 to transmit the output torque to the rack (or the tie rod 204). The output torque of the motor 100 functions as a steering assist force to reduce the steering torque that the driver needs to apply during steering.

The torque detector 205 detects the steering torque applied to the steering wheel 201 by the driver. More specifically, when the steering torque is applied, a twist approximately proportional to the steering torque is generated in the torsion bar. The torque detector 205 detects a direction and angle of the twist of the torsion bar. The torque detector 205 outputs the detected steering torque to the control unit 41. The rotation sensor 43 detects a rotation speed of a rotating shaft (for example, the shaft 13). The rotation sensor 43 outputs the detected rotation speed to the control unit 41. The control unit 41 calculates a voltage to be applied to the motor 100 on the basis of the steering torque output from the torque detector 205, the rotation speed output from the rotation sensor 43, and the like. The control unit 41 controls the motor 100 (applies a voltage to the motor main body 10) on the basis of the calculation results. That is, the control unit 41 performs a feedback control based on information detected by the torque detector 205 and the rotation sensor 43.

As described above, the vehicle 300 according to the present embodiment includes the wheel 301, and the electric power steering device 200 including the motor 100 according to the above-described embodiment, in which the motor 100 is disposed in the vicinity of the wheel 301.

Generally, in a configuration in which a motor is disposed in the vicinity of a wheel such as a rack-assist type electric power steering device, water is likely to enter the inside of the motor from the outside of the vehicle. According to the motor 100 having the waterproof structure as in the above-described embodiment, it is possible to ensure waterproof properties even in such a configuration.

Further, the technical scope of the present disclosure is not limited to the above-described embodiment, and various modifications may be made in a range not departing from the spirit of the present disclosure.

For example, in embodiments 1 and 2, a GND pattern exposed from the control board 40 may be grounded to the holding portion 32 of the housing 30. In this case, the control board 40 becomes electrically stable, making it easier to reduce electromagnetic compatibility (EMC) noise from the MCU.

Also, in embodiments 1 and 2, the connector 50 may have a press-fit terminal connected (press-fitted) to the control board 40. Also, the press-fit terminal may be connected to an end portion of the control board 40. According to this configuration, it is possible to manufacture the motor 100 more easily manufactured compared to a case in which the connector 50 and the control board 40 are electrically joined by soldering. This makes it easier to reduce costs of the motor 100.

Also, the motor 100 may be used in a so-called column-assist type electric power steering device in which an output torque of the motor 100 is transmitted to the steering shaft 202. Alternatively, the motor 100 may be used in a so-called pinion-assist type electric power steering device in which an output torque of the motor 100 is transmitted to a pinion in the rack and pinion gear 203. Alternatively, the motor 100 may not necessarily be a motor used in an electric power steering device.

In addition, the components in the above-described embodiments may be appropriately replaced with well-known components within a range not departing from the spirit of the present invention, and furthermore, the above-described embodiments and modified examples may be appropriately combined.

### Reference Signs List

300 Vehicle
200 Electric power steering device
100 Motor
10 Motor main body
11 Stator
12 Rotor
20 Frame
30 Housing
31a Recessed portion (relief portion)
32 Holding portion
40 Control board
41 Control unit
42 Electrolytic capacitor
50 Connector
60 Cover
71 First waterproof portion
71a Vertical wall portion
71b Horizontal wall portion
72 Second waterproof portion
72a Vertical wall portion
72b Horizontal wall portion
73 Third waterproof portion
73a Vertical wall portion
73b Horizontal wall portion
B1 First boundary portion
B2 Second boundary portion
B3 Third boundary portion
Z Vertical direction

## Claims

1. A motor comprising:
a motor main body including a stator and a rotor which rotates around a rotation axis extending in a vertical direction;
a frame housing the motor main body;
a housing positioned above the motor main body;
a control board having a control unit that controls the motor main body and positioned above the housing;
a connector electrically connected to the control unit and fixed to the frame;
a cover covering the control unit;
a first waterproof portion sealing a first boundary portion that is a boundary portion between the frame and the cover and having waterproof properties; and
a second waterproof portion sealing a second boundary portion that is a boundary portion between the connector and the frame and having waterproof properties, wherein
each of the first boundary portion and the second boundary portion has an annular shape when viewed from the vertical direction.

2. The motor according to claim 1, wherein the first waterproof portion and the second waterproof portion each have a vertical wall portion extending in the vertical direction and a horizontal wall portion extending in a direction intersecting the vertical direction.

3. The motor according to claim 1 or 2, wherein the housing has a holding portion positioned at an upper portion of the housing and holding the control unit with a screw.

4. The motor according to any one of claims 1 to 3, wherein the connector has a press-fit terminal connected to the control board.

5. The motor according to claim 4, wherein the press-fit terminal is connected to an end portion of the control board.

6. The motor according to any one of claims 1 to 5, wherein the housing includes a relief portion for preventing interference with an electrolytic capacitor mounted on the control board.

7. A motor comprising:
a motor main body including a stator and a rotor which rotates around a rotation axis extending in a vertical direction;
a frame housing the motor main body;
a housing positioned above the motor main body;
a control board having a control unit that controls the motor main body and positioned above the housing;
a connector electrically connected to the control unit and fixed to the housing;
a cover covering the control unit;
a first waterproof portion sealing a first boundary portion that is a boundary portion between the frame and the cover and having waterproof properties; and
a third waterproof portion sealing a third boundary portion that is a boundary portion between the connector and the cover and having waterproof properties, wherein
each of the first boundary portion and the third boundary portion has an annular shape when viewed from the vertical direction.

8. The motor according to claim 7, wherein the first waterproof portion and the third waterproof portion each have a vertical wall portion extending in the vertical direction and a horizontal wall portion extending in a direction intersecting the vertical direction.

9. The motor according to claim 7 or 8, wherein the housing has a holding portion positioned at an upper portion of the housing and holding the control unit with a screw.

10. The motor according to any one of claims 7 to 9, wherein the connector has a press-fit terminal connected to the control board.

11. The motor according to claim 10, wherein the press-fit terminal is connected to an end portion of the control board.

12. The motor according to any one of claims 7 to 11, wherein the housing includes a relief portion for preventing interference with an electrolytic capacitor mounted on the control board.

13. A vehicle comprising:
a wheel; and
an electric power steering device including a motor according to any one of claims 1 to 12, wherein
the motor is disposed in the vicinity of the wheel.
